(19) Europäisches Patentamt
European Patent Office
Office européen des brevets

(11) Veröffentlichungsnummer : **0 093 335**
**B1**

(12) **EUROPÄISCHE PATENTSCHRIFT**

(45) Veröffentlichungstag der Patentschrift : **10.09.86**

(51) Int. Cl.⁴ : **C 08 G 18/66**, C 08 G 18/08, C 08 G 18/14, C 08 G 18/42

(21) Anmeldenummer : **83103897.1**

(22) Anmeldetag : **21.04.83**

(54) **Verfahren zur Herstellung von Formkörpern auf Basis von Polyurethan- oder Polyurethan-Polyharnstoff-Elastomeren mit verbesserter Licht- und Witterungsbeständigkeit.**

(30) Priorität : **29.04.82 DE 3215908**

(43) Veröffentlichungstag der Anmeldung : **09.11.83 Patentblatt 83/45**

(45) Bekanntmachung des Hinweises auf die Patenterteilung : **10.09.86 Patentblatt 86/37**

(84) Benannte Vertragsstaaten : **BE DE FR GB IT**

(56) Entgegenhaltungen :
**EP-A- 0 017 060**
**EP-A- 0 026 915**
**DE-A- 1 815 311**
**CHEMICAL ABSTRACTS, Band 94, Nr. 20, Mai 1981, Seite 63, Nr. 158123t, Columbus, Ohio, USA**

(73) Patentinhaber : **BASF Aktiengesellschaft**
**Carl-Bosch-Strasse 38**
**D-6700 Ludwigshafen (DE)**

(72) Erfinder : **Nissen, Dietmar, Dr.**
**Ziegelhaeuser Landstrasse 31**
**D-6900 Heidelberg (DE)**
Erfinder : **Marx, Matthias, Dr.**
**Seebacher Strasse 49**
**D-6702 Bad Duerkheim (DE)**
Erfinder : **Schmidt, Hans Ulrich**
**Wredestrasse 53**
**D-6700 Ludwigshafen (DE)**

**EP 0 093 335 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Herstellung von vernetzten Kunststoffen nach dem Isocyanat-Polyadditionsverfahren ist bekannt. Nach Angaben der DE-AS 1 196 864 (US 3 099 516) werden hierzu Hydroxylgruppen aufweisende Verbindungen und Polyisocyanate in Gegenwart von Treibmitteln und Katalysatoren verschäumt. Bei geeigneter Wahl der Hydroxylgruppen aufweisenden Polyester, Polyether, Polyetherester, Polyesteramide u. a. und organischen Polyisocyanate sowie durch zusätzliche Mitverwendung von Kettenverlängerungsmitteln, wie z. B. Glykolen oder Diaminen, können nach dieser Methode sowohl elastische wie starre Polyurethane sowie alle dazwischen liegenden Modifikationen hergestellt werden.

Formkörper aus Polyurethan- oder Polyurethan-Polyharnstoff-Elastomeren, im folgenden abgekürzt PU — bzw. PU-PH-Elastomere genannt — weisen befriedigende bis sehr gute mechanische Eigenschaften auf. Wenig zufriedenstellend ist hingegen die matt erscheinende Oberfläche der Formkörper. Sehr unbefriedigend ist ferner die Licht- und Witterungsbeständigkeit, die sich nur durch Zusatz von teueren Stabilisatoren kurzfristig verbessern läßt, da diese die Abbaureaktionen lediglich verzögern.

Die Aufgabe der vorliegenden Erfindung bestand darin, PU- oder PU-PH-Elastomere zu entwickeln, die als one-shot-Systeme nach der Reaktionspritzgußtechnik, im folgenden kurz « RIM » genannt zu Formkörpern mit sehr guter Oberflächenstruktur, Licht- und Witterungsbeständigkeit verarbeitet werden können. Die mechanischen Eigenschaften der Formkörper sollten zumindest dem Stand der Technik entsprechen.

Diese Aufgabe konnte überraschenderweise gelöst werden durch ein Verfahren zur Herstellung von Formkörpern auf Basis von PU- oder PU-PH-Elastomeren durch Umsetzung von

a) organischen Polyisocyanaten,
b) Polyhydroxylverbindungen und
c) Kettenverlängerungsmitteln

in Gegenwart oder Abwesenheit von

d) Treibmitteln,

das dadurch gekennzeichnet ist, daß man als Polyhydroxylverbindungen (b)

i) Polyester-polyole mit Molekulargewichten von 1 000 bis 3 000 und Hydroxylzahlen von 170 bis 35, hergestellt durch Polykondensation von organischen Dicarbonsäuren und einer Polyolmischung aus mindestens 3 Polyolen

und/oder

ii) Polyether-polyester-polyole mit endständigen Polyester-polyol-Gruppen, Molekulargewichten von 1 000 bis 8 000 und Hydroxylzahlen von 170 bis 15 verwendet und

die Komponenten (a) bis (c) oder (a) bis (d) als one-shot-Systeme nach der Reaktionsspritzgußtechnik in offenen oder geschlossenen Formen verarbeitet.

Die nach dem erfindungsgemäßen Verfahren hergestellten Formkörper besitzen gute mechanische Eigenschaften, wobei die deutlich höhere Bruchdehnung und erhöhte Weiterreißfestigkeit bemerkenswert ist. Die Formkörperoberfläche ist glänzend und völlig glatt. Die Oberfläche ist jedoch nicht nur in unlackiertem Zustand hervorragend, sondern sie verbessert auch bei der Lackierung die Lackqualität erheblich.

Besonders hervorzuheben ist die hohe Licht- und Witterungsbeständigkeit der erfindungsgemäß hergestellten unstabilisierten Formkörper, deren Oberfläche nach 400 Stunden Bewitterung im Xenontest 1 200 lediglich eine mit dem Auge kaum wahrnehmbare Vermattung zeigt.

Zu den für das erfindungsgemäßen Verfahren verwendbare Aufbaukomponenten (a) bis (c) sowie gegebenenfalls (d) bis (f) ist folgendes auszuführen :

Als organische Polyisocyanate (a) kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6 ; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan- und Polyphenyl-polymethylen-polyisocyanaten (Roh-MDI). Die genannten Di- und Polyisocyanate können einzeln oder in Form von Mischungen eingesetzt werden.

Häufig werden auch sogenannten modifizierte mehrwertige Isocyanate, d. h. Produkte die durch chemische Umsetzung von Di- und/oder Polyisocyanaten erhalten werden, verwendet. Als modifizierte organische Di- und Polyisocyanate kommen beispielsweise in Betracht : Carbodiimidgruppen aufweisende Polyisocyanate gemäß DE-PS 1 092 007, Allophanatgruppen aufweisende Polyisocyanate, wie sie z. B. in der britischen Patentschrift 994 890, den ausgelegten Unterlagen des belgischen Patents 761 626 und der NL-OS 7 102 524 beschrieben werden, Isocyanuratgruppen aufweisende Polyisocyanate wie sie

z. B. in den DE-PS 1 022 789, 1 222 067 und 1 027 394 sowie den DE-OS 1 929 034 und 2 004 048 beschrieben werden, Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 1 230 778, Biuretgruppen aufweisende Polyisocyanate z. B. gemäß DE-PS 11 01 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 1 231 688 genannt werden.

Vorzugsweise kommen jedoch zur Anwendung : urethangruppen-haltige Polyisocyanate, beispielsweise mit niedermolekularen Diolen, Triolen oder Polypropylen- bzw. Polyethylen-glykolen sowie den erfindungsgemäß verwendbaren Polyester-polyolen (i) und/oder Polyether-polyester-polyolen (ii) modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Als Polyhydroxylverbindungen (b), die in den PU- oder PU-PH-Elastomeren als Weichsegmente fungieren, werden vorzugsweise Polyester-polyole (i) mit Molekulargewichten von 1 000 bis 3 000, vorzugsweise von 1 500 bis 2 500 und Hydroxylzahlen von 170 bis 35, vorzugsweise von 112 bis 42 verwendet, die hergestellt werden durch Polykondensation von mindestens einer organischen Dicarbonsäure mit einer Polyolmischung, welche mindestens 3 Polyole, beispielsweise 3 bis 5 Polyole, enthält und vorzugsweise aus 3 bis 4 Polyolen besteht.

Die Polyester-polyole sind zweckmäßigerweise überwiegend linear, d. h. im Sinne der Isocyanatreaktion difunktionell, oder maximal trifunktionell. Werden höherfunktionelle Polyester-polyole allein oder im Gemisch mit difunktionellen Polyester-polyolen verwendet, so können diese nur in solchen Mengen eingesetzt werden, daß die Funktionalität bzw. durchschnittliche Funktionalität des Gemisches maximal 3, vorzugsweise 2,1 bis 2,7 ist. Die Polyester-polyole können dabei als Einzelkomponenten oder in Form von Mischungen untereinander zur Anwendung gelangen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und den erfindungsgemäß verwendbaren Polyolmischungen hergestellt werden. Als Dicarbonsäuren kommen beispielsweise in Betracht : aliphatische Dicarbonsäuren, wie Bernsteinsäure, Glutarsäure, Adipinsäure, Korksäure, Azelainsäure, Sebacinsäure, Decandicarbonsäure, Maleinsäure und Furmarsäure und aromatische Dicarbonsäuren, wie Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivàte, wie z. B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.-Teilen, und insbesondere Adipinsäure.

Erfindungsgemäß verwendbare Polyolmischungen aus mindestens 3 Polyolen können beispielsweise enthalten : Diole wie z. B. Ethylenglykol, Propandiol-1,2 und -1,3, Butandiol-1,4, Pentandiol-1,5, Hexandiol-1,6, Octandiol-1,8, 1,4-Bis-hydroxymethyl-cyclohexan, 2-Methyl- bzw. 2,2-Dimethyl-propandiol-1,3, 3-Methylpentandiol-1,5, Diethylenglykol, Dipropylenglykol und Dibutylenglykol, Triole z. B. Glycerin, Trimethylol-ethan, -propan und -butan und Tetrole wie z. B. Pentaerythrit.

Als Polyole eignen sich ferner trifunktionelle und vorzugsweise difunktionelle Polyoxyethylen-, Polyoxypropylen- und Polyoxyethylen-polyoxypropylen-polyole mit Molekulargewichten von 106 bis 2 000, vorzugsweise von 150 bis 1 500, die vorzugsweise im Gemisch mit zwei niedermolekularen Diolen z. B. Ethylenglykol und Butandiol-1,4, eingesetzt werden und wobei die Polyester-polyol-polykondensation so durchgeführt wird, daß die Polyoxyalkylen-polyole im Polyester-polyol nicht als endständige Reste gebunden werden.

Als Polyolmischungen seien beispielhaft genannt : Mischungen aus Butandiol-1,4, Pentandiol-1,5, Hexandiol-1,6 und Glycerin und/oder Trimethylolpropan, vorzugsweise in den Gewichtsverhältnissen von 10-50 : 30-60 : 8-35 : 2-15 Teilen, Mischungen aus Butandiol-1,4, Hexandiol-1,6, Diethylenglykol und Glycerin und/oder Trimethylolpropan, vorzugsweise in den Gewichts-verhältnissen von 10-50 : 15-45 : 15-65 : 2-15 Teilen, Mischungen aus Butandiol-1,4, Pentandiol-1,5, Hexandiol-1,6, gegebenenfalls Diethylenglykol und Glycerin und/oder Trimethylolpropan, vorzugsweise in den Gewichtsverhältnissen von 5-50 : 20-60 : 8-35 : 0-65 : 2-15 und insbesondere Mischungen aus Butandiol-1,4, Pentandiol-1,5 und Hexandiol-1,6, vorzugsweise in den Gewichtsverhältnissen von 15-30 : 40-55 : 15-30 Teilen und Mischungen aus Butandiol-1,4, Hexandiol-1,6 und 2,2-Dimethylpropandiol-1,3 und/oder Diethylenglykol, vorzugsweise in den Gewichtsverhältnissen von 20-60 : 20-40 : 20-40 Teilen.

Die erfindungsgemäß zu verwendenden Polyester-polyole können hergestellt werden nach an sich bekannten Verfahren durch Polykondensation der organischen Dicarbonsäuren und der Polyolmischung bei Temperaturen von 100 bis 250 °C, vorzugsweise 130 bis 220 °C, gegebenenfalls in Gegenwart von bekannten Veresterungskatalysatoren, wie z. B. organischen Verbindungen von Titan, Vanadium oder

Zinn und/oder Wasserschleppmitteln, wie z. B. Benzol, Toluol, Xylol oder Chlorbenzol zur azeotropen Destillation des Kondenswasser, bevorzugt unter vermindertem Druck in der Endphase der Polykondensation.

Werden als Polyole die obengenannten Polyoxyalkylen-polyole mitverwendet, so werden diese zunächst mit den organischen Dicarbonsäuren im Überschuß in carboxylgruppenhaltige Polyester übergeführt und danach mit den restlichen Polyolen und gegebenenfalls zusätzlichen Dicarbonsäuren zu Polyester-polyolen verestert.

Als Polyhydroxylverbindungen (b) eignen sich ferner Polyether-polyester-polyole (ii) mit endständigen Polyester-polyolgruppen, Molekulargewichten von 1 000 bis 8 000, vorzugsweise von 1 000 bis 4 000 und Hydroxylzahlen von 170 bis 15, vorzugsweise von 112 bis 40. Die Polyether-polyester-polyole werden hergestellt durch Veresterung der obengenannten Polyoxyethylen-, Polyoxypropylen- und/oder Polyoxyethylen-polyoxypropylen-polyole mit Lactonen wie z. B. β-Propiolacton, γ-Butyrolacton, γ-Valerolacton und vorzugsweise ε-Caprolacton.

Die als Polyhydroxylverbindungen (b) verwendbaren Polyester-polyole (i) und Polyether-polyester-polyole (ii) können einzeln oder in Form von Gemischen eingesetzt werden. Sie können ferner mit üblichen Polyether-polyolen und/oder Polyester-polyolen gemischt werden, wobei die Mischungen pro 100 Gew.-Teile Polyester-polyole (i) und/oder Polyester-polyether-polyole (ii) 10 bis 900 Gew.-Teile, vorzugsweise 40 bis 300 Gew.-Teile übliche Polyether- und/oder Polyester-polyole enthalten.

Unter üblichen Polyether- oder Polyester-polyolen sind im Sinne der Erfindung zu verstehen : handelsübliche Polyoxyalkylen-polyole mit Molekulargewichten von 2 000 bis 12 000, die erhalten werden durch Polyaddition von einem oder mehreren Alkylenoxiden mit 2 bis 10 Kohlenstoffatomen, vorzugsweise 2 bis 4 Kohlenstoffatomen im Alkylenrest, wie z. B. Tetrahydrofuran, 1,3-Propylenoxid, 1,2- bzw. 2,3-Butylenoxid und vorzugsweise Ethylenoxid und 1,2-Propylenoxid an ein Startermolekül, das 2 bis 8, vorzugsweise 2 bis 3 reaktive Wasserstoffatome gebunden enthält, oder handelsübliche Polyester-polyole mit Molekulargewichten von 800 bis 3 500, die hergestellt werden aus den obengenannten organischen Dicarbonsäuren und einem Polyol oder einer Polyolmischung aus maximal zwei Polyolen.

Als Startermoleküle für die Polyether-polyolherstellung kommen vorzugsweise in Betracht : Wasser, Ammoniak, Alkanolamine, wie z. B. Ethanolamin, Diethanolamin, N-Methyl- und N-Ethyl-ethanolamin, N-Methyl- und N-Ethyl-diethanolamin und Triethanolamin und insbesondere mehrwertige, vorzugsweise zwei- und/oder dreiwertige Alkohole, wie z. B. Ethylen-, 1,2- und 1,3-Propylen-, Diethylen-, Dipropylen-, 1,4-Butylen-, 1,6-Hexamethylen-glykol, Glycerin, Trimethylolpropan, Pentaerythrit, Sorbit und Saccharose.

Als Kettenverlängerungsmittel (c) werden beim erfindungsgemäßen Verfahren di- bis tetrafunktionelle, vorzugsweise di- und/oder trifunktionelle araliphatische und/oder vorzugsweise aliphatische Polyole mit Molekulargewichten von 60 bis 400, vorzugsweise 60 bis 300, verwendet. In Betracht kommen beispielsweise aliphatische und/oder araliphatische Diole mit 2 bis 14, vorzugsweise 2 bis 6 Kohlenstoffatomen, wie Ethylenglykol, Propandiol-1,3, Butandiol-1,4, Pentandiol-1,5, Hexandiol-1,6, Octandiol-1,8, Decandiol-1,10, Diethylenglykol, Dipropylenglykol und Bis-(2-hydroxyethyl)-hydrochinon, Triole, wie Glycerin und Trimethylolpropan, Tetrole, wie Pentaerythrit und niedermolekulare hydroxylgruppenhaltige Polyoxyalkylen-polyether auf Basis Ethylenoxid und/oder Propylenoxid und den vorgenannten Polyolen oder aliphatischen Diaminen mit Molekulargewichten von 60 bis 116 als Startermoleküle.

Als Kettenverlängerungsmittel (c) geeignet sind ferner primäre sterisch gehinderte, aromatische Diamine, die mindestens in einer ortho-Stellung zu den Aminogruppen mit einem Alkylrest substituiert sind. Vorzugsweise Anwendung finden solche primären aromatischen Diamine, die bei Raumtemperatur flüssig und mit den Polyhydroxylverbindungen (b) und den Polyolen unter den Verarbeitungsbedingungen ganz oder zumindest teilweise mischbar sind. Bewährt haben sich beispielsweise alkylsubstituierte meta-Phenylen-diamine der Formeln

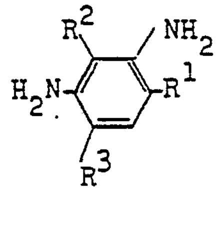

und/oder

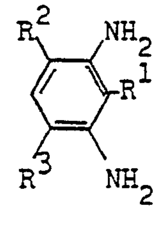

in denen $R^1$ ein Wasserstoffatom oder ein linearer oder verzweigter Alkylrest mit 1 bis 10, vorzugsweise 1 bis 6 Kohlenstoffatomen ist und $R^2$ und $R^3$ gleiche oder verschiedene Alkylreste mit 1 bis 3 Kohlenstoffatomen, wie z. B. ein Methyl-, Ethyl-, Propyl- oder Isopropylrest sind. Geeignet sind insbesondere solche Alkylreste $R^1$, bei denen die Verzweigungsstelle am $C^1$-Kohlenstoffatom sitzt. Neben Wasserstoff seien als Alkylreste $R^1$ beispielhaft genannt : der Methyl-, Ethyl-, n- und iso-Propyl-, Butyl-, Hexyl-, Octyl-, Decyl-, 1-Methyl-octyl-, 2-Ethyl-octyl, 1-Methyl-hexyl-, 1,1-Dimethyl-pentyl-, 1,3,3-Trimethyl-hexyl, 1-Ethyl-pentyl, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylen-diamin-1,3.

Bewährt haben sich ferner 3,3'-di- und 3,3',5,5'-tetra-n-alkylsubstituierte 4,4'-Diamino-diphenylmethane wie z. B. 3,3'-Dimethyl-, 3,3',5,5'-Tetramethyl-, 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenylmethane der Formel

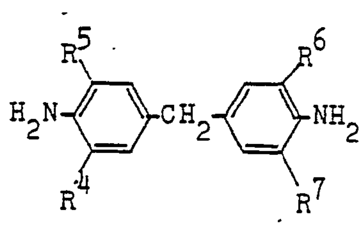

in der $R^4$, $R^5$, $R^6$ und $R^7$ gleich oder verschieden sind und einen Methyl-, Ethyl-, Propyl-, Isopropyl, sek.-Butyl- und tert.-Butylrest bedeuten, wobei jedoch mindestens einer der Reste ein Isopropyl- oder sek. Butylrest sein muß. Die 4,4'-Diamino-diphenylmethane können auch im Gemisch mit Isomeren der Formeln

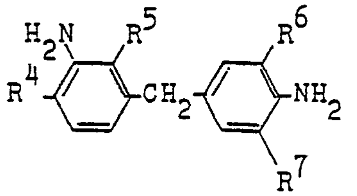

und/oder

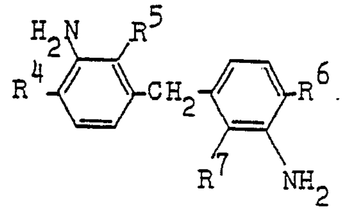

und/oder

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Dimethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5'-Dimethyl-3',5-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diaminodiphenylmethan.

Vorzugsweise verwendet werden folgende primären aromatischen Diamine: 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3,-phenylendiamin-1,5 und/oder beliebige Gemische dieser isomeren Diamine, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Die als Kettenverlängerungsmittel (c) geeigneten Polyole und primären aromatischen Diamine können einzeln oder in Form von Polyol- oder Diaminmischungen eingesetzt werden. Sofern als Kettenverlängerungsmittel (c) Mischungen aus Polyolen und Diaminen Anwendung finden, enthalten diese vorteilhafterweise pro 100 Gew.-Teile Polyol oder -mischung 5 bis 50, vorzugsweise 10 bis 40 Gew.-Teile Diamin oder -mischung.

Die di- bis tetrafunktionellen aliphatischen und/oder araliphatischen Polyole oder/und primären aromatischen Diamine (Komponente c) werden beim erfindungsgemäßen Verfahren üblicherweise in Mengen von 5 bis 150 Gew.-Teilen, vorzugsweise 8 bis 100 Gew.-Teilen, bezogen auf 100 Gew.-Teile Polyhydroxylverbindung (b) verwendet.

Zu Treibmitteln (d), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise eingesetzt werden, betragen 0,5 bis 2 Gew.-%, bezogen auf das Gewicht an Polyhydroxylverbindung (b).

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen PU- oder PU-PH-Formkörpern hängt ab von der Dichte, die man erreichen will sowie gegebenenfalls von der Mitverwendung von Wasser.

Im allgemeinen liefern Mengen von 0,5 bis 15 Gew.-Teilen, bezogen auf 100 Gew.-Teile Polyhydroxylverbindung (b), zufriedenstellende Ergebnisse.

Der Reaktionsmischung können gegebenenfalls auch noch Hilfsmittel (e) und/oder Zusatzstoffe (f) einverleibt werden. Genannt seinen beispielsweise Katalysatoren, oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als Katalysatoren werden insbesondere Verbindungen verwendet, die die Reaktion der Polyhydroxylverbindung (b) und hydroxylgruppenhaltigen Kettenverlängerungsmittel (c) mit den Polyisocyanaten (a) stark beschleunigen. In Betracht kommen organische Metallverbindungen, vorzugsweise organische Zinnverbindungen, wie Zinn-(II)-Salze von organischen Carbonsäuren, z. B. Zinn-(II)-acetat, Zinn-(II)-octoat, Zinn-(II)-ethylhexoat und Zinn-(II)-laurat und die Dialkylzinn-(IV)-salze von organischen Carbonsäuren, z. B. Dibutylzinn-diacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin oder insbesondere monocyclische Amidine gemäß deutscher Patentanmeldung P 3 126 436.0, tertiäre Amine, wie Triethylamin, Tributylamin, Dimethylbenzylamin, N-Methyl-, N-Cyclohexylmorpholin, N,N,N',N'-Tetramethyl-ethylendiamin, N,N,N',N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht : Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindungen (b).

Als oberflächenaktive Substanzen kommen Verbindungen in Betracht, welche zur Unterstützung der Homogenisierung der Ausgangsstoffe dienen und gegebenenfalls auch geeignet sind die Zellstruktur zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandisulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fetallkohole und Dimethylpolysiloxane. Die oberflächenaktiven Substanzen werden üblicherweise in Mengen von 0,01 bis 5 Gewichtsteilen, bezogen auf 100 Gewichtsteile Polyhydroxylverbindung (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt : anorganische Füllstoffe wie silikatische Mineralien, beispielsweise Schichtsilikate, wie Antigorit, Serpentin, Hornblenden, Amphibole, Chrisotil, Talkum ; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u. a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht : Kohle, Melamin, Kollophonium, Cyclopentadienylharze und Pfropfpolymerisate auf Styrol-Acrylnitrilbasis, die durch *in situ* Polymerisation von Acrylnitril-Styrol-Mischungen in Polyetherolen, olefinisch ungesättigten Polyetherolen oder olefinisch ungesättigten Polyetherol-Lösungsmittelgemischen hergestellt und danach in den Polyhydroxylverbindungen (b) dispergiert werden sowie Filler-Dispersionen, bei denen lösungsmittelhaltige oder wäßrige Polymerdispersionen mit den Polyhydroxylverbindungen (b) gemischt werden und danach das Lösungsmittel oder Wasser abgetrennt wird.

Die anorganischen und organischen Füllstoffe können einzeln oder als Gemische verwendet werden. Vorzugsweise Anwendung finden stabile Füllstoff-Polyester(i)- oder -Polyether-polyester-polyol(ii)-Dispersionen, bei denen die Füllstoffe in Gegenwart der Polyhydroxylverbindungen (b) *in situ* mit hohen örtlichen Energiedichten auf eine Teilchengröße kleiner als 7 μm zerkleinert und hierbei gleichzeitig dispergiert werden.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Mischung aus Polyisocyanaten und Polyhydroxylverbindungen einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogenhaltigen Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivate zum Flammfestmachen der Formkörper verwendet werden. Im allgemeinen hat es sich als zweckmäßig erwiesen 5 bis 50 Gewichtsteile, vorzugsweise 5 bis 25 Gewichtsteile der genannten Flammschutzmittel für jeweils 100 Gewichtsteile Polyhydroxylverbindungen zu verwenden.

Nähere Angaben über die obengenannten anderen üblichen Hilfs- und Zusatzstoffe sind der Fachliteratur, beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung der kompakten oder zellhaltigen Formkörper auf Basis von PU- oder PU-PH-Elastomeren werden die organischen Polyisocyanate, Polyhydroxylverbindungen und Kettenverlängerungsmittel in solchen Mengen zur Umsetzung gebracht, daß das Verhältnis von NCO-Gruppen zu Zerewitinoff aktiven Wasserstoffatomen, gebunden an OH- oder $NH_2$-Gruppen 1 : 0,85 bis 1,25, vorzugsweise 1 : 0,95 bis 1,15 beträgt.

Die Herstellung der zellhaltigen und vorzugsweise kompakten PU- oder PU-PH-Formkörper erfolgt im one shot-Verfahren nach der bekannten Reaktionsspritzguß-Technik. Diese Verfahrensweise wird beispielsweise beschrieben von Piechota und Röhr in « Integralschaumstoff », Carl-Hanser-Verlag, München, Wien 1975 ; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen nach dem Zweikomponenten-Verfahren zu arbeiten und die Kettenverlängerungsmittel in den Polyhydroxylverbindungen zu lösen und gegebenenfalls mit Treibmitteln, Hilfs- und Zusatzstoffen in der Komponente A zu vereinigen und als Komponente B die organischen Polyisocyanate zu verwenden.

Die Menge des in die Form eingebrachten Reaktionsgemisches wird so bemessen, daß die erhaltenen mikrozellularen bzw. kompakten Formkörper eine Dichte von 0,8 bis 1,4 $g/cm^3$, vorzugsweise von 0,9 bis 1,35 $g/cm^3$ und die zellhaltigen Formkörper eine Dichte von 0,2 bis 1,1 $g/cm^3$, vorzugsweise von 0,25 bis 0,7 $g/cm^3$ aufweisen. Die Ausgangskomponenten werden mit einer Temperatur von 15 bis 80 °C, vorzugsweise von 30 bis 65 °C in die Form eingebracht. Die Formtemperatur beträgt zweckmäßigerweise 20 bis 90 °C, vorzugsweise 35 bis 70 °C, gegebenenfalls kann es vorteilhaft sein, übliche Formtrennmittel, beispielsweise auf Wachs- oder Silikonbasis, zur Verbesserung der Entformung, einzusetzen. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhätlichen kompakten bzw. mikrozllularen PU- oder PU-PH-Formkörper eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen, die zellhaltigen Formkörper finden beispielsweise als Schuhsohlen, Armlehnen, Kopfstützen, Sicherheitsabdeckungen im Automobilinnenraum sowie als Motorrad- und Fahrradsättel, Sitzkissen und Deckschichten in Verbundschaumstoffen Anwendung.

Die in den Beispielen genannten Teile beziehen sich auf das Gewicht.

Zur Herstellung der PU- oder PU-PH-Formkörper nach dem erfindungsgemäßen Verfahren wurden die folgenden Polyhydroxylverbindungen und Polyisocyanate verwendet

PES A: Polyester-polyol mit einer OH-Zahl von 56, hergestellt durch Polykondensation von Adipinsäure mit einer Diolmischung aus Butandiol-1,4, Pentandiol-1,5 und Hexandiol-1,6 im Gewichtsverhältnis 1 : 2 : 1.

PES B: Polyether-polyester-polyol mit einer OH-Zahl von 56, hergestellt durch Veresterung eines Polyoxyethylenglykols mit Caprolacton (®Capa 520 der Firma Interox)

PES C: Butandiol-1,4-Ethylenglykoladipat mit einer OH-Zahl von 56 (Molverhältnis Butandiol : Ethylenglykol 1 : 2)

PE A: Blockcopolyether-polyol auf Basis Glycerin, Propylenoxid und Ethylenoxid mit einer OH-Zahl von 56

PE B: Polyether-polyol auf Basis Trimethylolpropan und Ethylenoxid mit einer OH-Zahl von 930

Präpolymer A: Reaktionsprodukt aus 4,4'-Diphenylmethan-diisocyanat und Dipropylenglykol mit einem NCO-Gehalt von 23 Gew.-%

Präpolymer B: Reaktionsprodukt aus 4,4'-Diphenylmethan-diisocyanat und einem Diethylenglykoladipat der OH-Zahl 42 mit einem NCO-Gehalt von 20,5 Gew.-%

Präpolymer C: Carbodiimidgruppen enthaltendes 4,4'-Diphenylmethan-diisocyanat mit einem NCO-Gehalt von 29,5 Gew.-%

Beispiel 1

A-Komponente : Mischung aus

63,8 Teilen PES A,
35,0 Teilen 3,3',5,5'-Tetraisopropyl-4,4'-diamino-diphenylmethan,
1,0 Teilen einer 33 gew.-%igen Lösung von Diazabicyclooctan in Ethylenglykol und
0,2 Teilen Dibutylzinndilaurat

B-Komponente :
Präpolymer B

100 Teile der A-Komponente und
58,2 Teile der B-Komponente — entsprechend einem Isocyanatindex von 105 — wurden nach dem RIM-Verfahren auf einer Hochdruckdosieranlage vom Typ RPuromat 80 der Elastogran Maschinenbau verarbeitet.

Die A- und B-Komponente und die verschließbare Plattenform aus Aluminium (500 × 300 × 4 mm) wurden hierzu auf 50 °C temperiert.

Beispiel 2

Man verfährt analog den Angaben von Beispiel 1, verwendet jedoch 60,9 Teile der B-Komponente, entsprechend einem Isocyanatindex von 1,10.
An den erhaltenen Prüfplatten mit der Rohdichte von 1,05 g/cm³ wurden folgende mechanische Eigenschaften gemessen

| Eigenschaften | Beispiel 1 | Beispiel 2 |
|---|---|---|
| Knicktest [1] [Sek] | 20 | 20 |
| Reißdehnung (DIN 53 504) [%] | 350 | 420 |
| Reißfestigkeit (DIN 53 504) [N/mm²] | 34 | 41 |
| Weiterreißfestigkeit (DIN 53 515) [N/mm] | 130 | 126 |
| Härte (DIN 53 505) [Shore D] | 57 | 58 |

[1] Die Prüfplatten zeigten zu diesem Zeitpunkt beim Umbiegen um 180° keine Rißbildung

Beispiele 3a und 3b

A-Komponente :
Mischung aus

70,73 Teilen PES A,
0,5 Teilen PE B,
19,0 Teilen Ethylenglykol,
0,3 Teilen einer 33 gew.-%igen Lösung von Diazabicyclooctan in Ethylenglykol
0,25 Teilen eines Hexahydro-1-(3,4,5,6-tetrahydro-7H-azepin-2-yl)-1H-azepin-Dibutylzinn-dilaurat-Komplex,
6,15 Teilen einer 20 gew.-%igen Schwarzpigmentpaste und
3,07 Teilen Methylenchlorid

B-Komponente :
Präpolymer A

100 g der A-Komponente und
127 g der B-Komponente —
entsprechend einem Isocyanatindex von 100 — wurden nach dem RIM-Verfahren auf einer Hochdruckdosieranlage vom Typ Puromat 80 der Elastogran-Maschinenbau mit einer Komponententemperatur von 50 °C in einer verschlossenen, auf 50 °C temperierten Aluminiumform (500 × 300 × 4 mm) zu Prüfplatten verarbeitet. Der Verdichtungsgrad betrug 1,7.

An der Prüfplatte wurden die in der folgenden Tabelle zusammengefaßten mechanischen Eigenschaften gemessen.

Nach Beispiel 3a war die Prüfplatte ungetempert, während sie nach Beispiel 3b 1 Stunde bei 120 °C getempert wurde.

## Beispiele 4a und 4b

A-Komponente : analog Beispiel 3a und 3b

B-Komponente :
Präpolymer C

100 g der A-Komponente und
100 g der B-Komponente —
entsprechend einem Isocyanatindex von 100 — wurden analog den Angaben der Beispiele 3a und 3b zu Prüfplatten verarbeitet. Der Verdichtungsgrad betrug 2,0.

Nach Beispiel 4a war die Prüfplatte ungetempert, während sie gemäß Beispiel 4b 1 Stunde bei 120 °C getempert wurde. Die mechanischen Eigenschaften sind in der folgenden Tabelle zusammengefaßt.

## Beispiele 5a und 5b

A-Komponente :
Mischung aus

70,73 Teilen PES B,
19,00 Teilen Ethylenglykol,
0,5 Teilen PE B,
0,3 Teilen einer 33 gew.-%igen Lösung von Diazabicyclooctan in Ethylenglykol,
0,25 Teilen eines Hexahydro-1-(3,4,5,6-tetrahydro-7H-azepin-2-yl)-azepin-Dibutylzinn-dilaurat-Komplex,
6,15 Teilen einer 20 gew.-%igen Schwarzpigmentpaste und
3,07 Teilen Methylenchlorid.

B-Komponente :
Präpolymer A

100 g der A-Komponente und
127 g der B-Komponente —
entsprechend einem Isocyanatindex von 100 — wurden analog den Beispielen 3a und 3b zu Prüfplatten verarbeitet. Der Verdichtungsgrad betrug 1,6.

Gemäß Beispiel 5a wurden die mechanischen Eigenschaften, die in der folgenden Tabelle zusammengefaßt sind, an einer ungetemperten Prüfplatte gemessen.

Nach Beispiel 5b wurde die Prüfplatte 1 Stunde bei 120 °C getempert.

## Beispiele 6a und 6b

A-Komponente : analog Beispiele 5a und 5b, wobei jedoch die 70,73 Teile PES B durch

35,36 Teile PES B und
35,36 Teile PES C ersetzt wurden.

B-Komponente :
Präpolymer A

100 g der A-Komponente und
127 g der B-Komponente —
entsprechend einem Isocyanatindex von 100 — wurden analog den Beispielen 3a und 3b zu Prüfplatten verarbeitet. Der Verdichtungsgrad betrug 1,7.

Die in den Prüfplatten gemessenen mechanischen Eigenschaften sind in der folgenden Tabelle zusammengefaßt.

Gemäß Beispiel 6a war die Prüfplatte ungetempert, während sie gemäß Beispiel 6b 1 Stunde bei 120 °C getempert wurde.

Beispiele 7a und 7b

A-Komponente : analog Beispiel 5a und 5b, wobei jedoch anstelle von

70,73 Teilen PES B
35,36 Teile PES A und
35,36 Teile PE A eingesetzt wurden.

B-Komponente :
Präpolymer A

100 g der A-Komponente und
126 g der B-Komponente —
entsprechend einem Isocyanatindex von 100 — wurden analog den Beispielen 3a und 3b zu Prüfplatten verarbeitet. Der Verdichtungsgrad betrug 2,0.

Die an den Prüfplatten gemessenen mechanischen Eigenschaften sind in der folgenden Tabelle zusammengefaßt. Bei Beispiel 7a war die Prüfplatte ungetempert, während sie bei Beispiel 7b eine Stunde bei 120 °C getempert wurde.

(Siehe Tabelle Seite 11 f.)

Tabelle

Mechanische Eigenschaften der RIM-Prüfplatten nach den Beispielen 3a bis 7b

| Eigenschaften | | Beispiele | | | | | | | | | |
|---|---|---|---|---|---|---|---|---|---|---|---|
| | | 3a | 3b | 4a | 4b | 5a | 5b | 6a | 6b | 7a | 7b |
| Rohdichte | [$g/cm^3$] | 1,05 | 1,05 | 1,05 | 1,05 | 1,05 | 1,05 | 1,05 | 1,05 | 1,05 | 1,05 |
| Knicktest [1] | [sec] | 30 | 30 | 30 | 30 | 25 | 25 | 30 | 30 | 40 | 40 |
| Reißdehnung nach DIN 53504 | [%] | 350 | 380 | 210 | 240 | 230 | 310 | 300 | 370 | 230 | 320 |
| Reißfestigkeit nach DIN 53404 | [$N/mm^2$] | 29 | 25 | 28 | 30 | 32 | 32 | 28 | 29 | 24 | 25 |
| Weiterreißfestigkeit nach DIN 53515 | [N/mm] | 154 | 168 | 105 | 115 | 125 | 118 | 141 | 143 | 130 | 140 |
| Härte nach DIN 53505 | [Shore D] | 60 | 61 | 61 | 62 | 57 | 58 | 60 | 60 | 62 | 63 |
| Biege-E-Modul nach DIN 53457 bei 23°C | [$N/mm^2$] | - | 420 | - | 450 | - | 250 | - | 300 | - | 460 |

[1] Die Prüfplatten zeigten zu diesem Zeitpunkt beim Umbiegen um 180° keine Rißbildung

**Patentansprüche**

1. Verfahren zur Herstellung von Formkörpern auf Basis von Polyurethan- oder Polyurethan-Polyharnstoff-Elastomeren durch Umsetzung von
   a) organischen Polyisocyanaten,
   b) Polyhydroxylverbindungen und,
   c) Kettenverlängerungsmitteln,

in Gegenwart oder Abwesenheit von
   d) Treibmitteln

dadurch gekennzeichnet, daß man als Polyhydroxylverbindungen (b)
   i) Polyester-polyole mit Molekulargewichten von 1 000 bis 3 000 und Hydroxylzahlen von 170 bis 35, hergestellt durch Polykondensation von organischen Dicarbonsäuren oder -derivaten und einer Polyolmischung aus mindestens 3 Polyolen

und/oder
   ii) Polyether-polyester-polyole mit endständigen Polyester-polyol-Gruppen, Molekulargewichten von 1 000 bis 8 000 und Hydroxylzahlen von 170 bis 15 verwendet und

die Komponenten (a) bis (c) oder (a) bis (d) als one-shot-Systeme nach der Reaktionsspritzgußtechnik verarbeitet.

2. Verfahren nach Anspruch 1, dadurch gekennzeichnet, daß die Formkörper im wesentlichen kompakt sind oder einen zelligen Kern und eine kompakte Außenhaut besitzen.

3. Verfahren nach Anspruch 1, dadurch gekennzeichnet, daß die Polyester-polyole (i) hergestellt werden durch Polykondensation von organischen Dicarbonsäuren und einer Polyolmischung, die enthält :

15 bis 30 Gew.-Teile Butandiol-1,4,
40 bis 55 Gew.-Teile Pentandiol-1,5 und
15 bis 30 Gew.-Teile Hexandiol-1,6 oder einer Polyolmischung, die enthält
20 bis 60 Gew.-Teile Butandiol-1,4
20 bis 40 Gew.-Teile Hexandiol-1,6 und
20 bis 40 Gew.-Teile 2,2-Dimethyl-propandiol-1,3 und/oder Diethylenglykol.

4. Verfahren nach Anspruch 1, dadurch gekennzeichnet, daß man zur Herstellung der Polyhydroxylverbindungen (b) als organische Dicarbonsäure Adipinsäure verwendet.

5. Verfahren nach Anspruch 1, dadurch gekennzeichnet, daß man die Polyester-polyole (i) und/oder Polyether-polyester-polyole (ii) mit üblichen Polyether-polyolen und/oder Polyester-polyolen mischt.

6. Verfahren nach Anspruch 5, dadurch gekennzeichnet, daß man pro 100 Gew.-Teile Polyester-polyole (i) und/oder Polyester-polyether-polyole (ii) 10 bis 900 Gew.-Teile übliche Polyether-polyole und/oder Polyester-polyole mitverwendet.

7. Verfahren nach Anspruch 1, dadurch gekennzeichnet, daß man als Kettenverlängerungsmittel (c) sterisch gehinderte primäre aromatische Diamine verwendet.

8. Verfahren nach Anspruch 1, dadurch gekennzeichnet, daß man zur Herstellung der Formkörper zusätzlich
   e) Hilfsmittel und/oder
   f) Zusatzstoffe mitverwendet.

9. Verfahren nach Anspruch 1, dadurch gekennzeichnet, daß man pro 100 Gew.-Teile Polyhydroxylverbindung (b) 5 bis 150 Gew.-Teile Kettenverlängerungsmittel (c) mitverwendet und das Äquivalenzverhältnis von NCO-Gruppen der Polyisocyanate (a) zu Zerewitinoff aktiven Wasserstoffatomen, gebunden an OH- oder OH- und $NH_2$-Gruppen der Komponenten (b) und (c) 1 : 0,85 bis 1,25 beträgt.

10. Verfahren nach den Ansprüchen 1 und 2, dadurch gekennzeichnet, daß die kompakten Formkörper eine Dichte von 0,8 bis 1,4 g/cm$^3$ besitzen und die Formkörper mit zelligem Kern und kompakter Außenhaut eine Gesamtdichte von 0,2 bis 1,1 g/cm$^3$ aufweisen und unter Verdichtung hergestellt werden.

**Claims**

1. A process for the production of molded parts based on polyurethane or polyurethane/polyurea elastomers by reaction of
   a) organic polyisocyanates,
   b) polyhydroxyl compounds, and
   c) chain extenders

in the presence or absence of
   d) blowing agents,

wherein the polyhydroxyl compounds (b) used are
   i) polyester polyols having molecular weights of from 1 000 to 3 000 and hydroxyl numbers of from

170 to 35, and produced by polycondensation of organic dicarboxylic acids or derivatives thereof and a polyol mixture of at least 3 polyols
and/or
ii) polyether-polyester polyols having terminal polyester polyol groups, molecular weights of from 1 000 to 8 000 and hydroxyl numbers of from 170 to 15,
and components (a) to (c) or (a) to (d) are processed as one-shot systems by reaction injection molding techniques.

2. A process as claimed in claim 1, wherein the molded parts are essentially non-cellular or have a cellular core and a non-cellular outer skin.

3. A process as claimed in claim 1, wherein the polyester polyols (i) are produced by polycondensation of organic dicarboxylic acids and a polyol mixture containing

15 to 30 parts by weight of 1,4-butanediol,
40 to 55 parts by weight of 1,5-pentanediol, and
15 to 30 parts by weight of 1,6-hexanediol, or a polyol mixture containing
20 to 60 parts by weight of 1,4-butanediol,
20 to 40 parts by weight of 1,6-hexanediol, and
20 to 40 parts by weight of 2,2-dimethyl-propanediol-1,3 and/or diethylene glycol.

4. A process as claimed in claim 1, wherein adipic acid is used as organic dicarboxylic acid for the preparation of polyhydroxyl compounds (b).

5. A process as claimed in claim 1, wherein the polyester polyols (i) and/or polyether-polyester polyols (ii) are mixed with conventional polyether polyols and/or polyester polyols.

6. A process as claimed in claim 5, wherein 10 to 900 parts by weight of conventional polyether polyols and/or polyester polyols are used per 100 parts by weight of the polyester polyols (i) and/or polyester-polyether polyols (ii).

7. A process as claimed in claim 1, wherein sterically hindered primary aromatic diamines are used as chain extenders (c).

8. A process as claimed in claim 1, wherein
e) auxiliaries and/or
f) additives
are additionally used for the preparation of the molded parts.

9. A process as claimed in claim 1, wherein from 5 to 150 parts by weight of chain extenders (c) are used per 100 parts by weight of polyhydroxyl compounds (b), and the equivalent ratio of NCO groups of polyisocyanates (a) to Zerewitinoff active hydrogen atoms, bonded to OH or OH and $NH_2$ groups of components (b) and (c), is 1 : 0.85 to 1.25.

10. A process as claimed in claims 1 and 2, wherein the non-cellular molded parts have a density of from 0.8 to 1.4 g/cm$^3$, and the molded parts having a cellular core and a non-cellular outer skin have a total density of from 0.2 to 1.1 g/cm$^3$ and are produced by compression molding.

**Revendications**

1. Procédé de préparation de corps moulés à base d'élastomères de polyuréthane ou polyuréthane-polyurée, par réaction de
a) des polyisocyanates organiques
b) des composés polyhydroxylés et
c) des allongeurs de chaîne, en présence ou absence de
d) gonflants
caractérisé par le fait que l'on utilise, comme composés polyhydroxylés (b)
i) des polyesters-polyols de poids moléculaires de 1 000 à 3 000 et d'indices d'hydroxyle de 170 à 35, préparés par polycondensation d'acides dicarboxyliques ou leurs dérivés et d'un mélange de polyols d'au moins 3 polyols
et/ou
ii) des polyéthers-polyesters-polyols à groupes polyesters-polyols terminaux, poids moléculaires de 1 000 à 8 000 et indices d'hydroxyle de 170 à 15,
et on traite les composants (a) à (c) ou (a) à (d), comme système one-shot, selon la technique de moulage par réaction-injection.

2. Procédé selon la revendication 1, caractérisé par le fait que les corps moulés sont sensiblement compacts ou possèdent un noyau cellulaire et une peau compacte.

3. Procédé selon la revendication 1, caractérisé par le fait que les polyesters-polyols (i) sont préparés par polycondensation d'acides dicarboxyliques organiques et d'un mélange de polyols qui contient :

15 à 30 parties en poids de butanediol-1,4,
40 à 55 parties en poids de pentanediol-1,5 et
15 à 30 parties en poids d'hexanediol-1,6 ou un mélange de polyols, qui contient

20 à 60 parties en poids de butanediol-1,4
20 à 40 parties en poids d'hexanediol-1,6 et
20 à 40 parties en poids de 2,2-diméthyl-propanediol-1,3 et/ou diéthylèneglycol.

4. Procédé selon la revendication 1, caractérisé par le fait que, pour la préparation des composés polyhydroxylés (b), on utilise, comme acides dicarboxylés organiques, de l'acide adipique.

5. Procédé selon la revendication 1, caractérisé par le fait que l'on mélange les polyesters-polyols (i) et/ou polyéthers-polyesters-polyols (ii) avec des polyéthers polyols et/ou polyesters-polyols usuels.

6. Procédé selon la revendication 5, caractérisé par le fait que, pour 100 parties en poids de polyesters-polyols (i) et/ou polyesters-polyéthers-polyols (ii), on utilise en plus 10 à 900 parties en poids de polyéthers-polyols et/ou polyesters-polyols usuels.

7. Procédé selon la revendication 1, caractérisé par le fait que l'on utilise, comme allongeurs de chaîne (c), des diamines aromatiques, primaires, empêchées stériquement.

8. Procédé selon la revendication 1, caractérisé par le fait que, pour la préparation des corps moulés, on utilise additivement,

e) des auxiliaires et/ou
f) des additifs.

9. Procédé selon la revendication 1, caractérisé par le fait que, pour 100 parties en poids de composés polyhydroxylés (b), on utilise en plus 5 à 150 parties en poids d'allongeurs de chaîne (c) et le rapport d'équivalence entre les groupes NCO des polyisocyanates (a) et les atomes d'hydrogène actifs selon Zerewitinoff, liés aux groupes OH ou OH et $NH_2$ des composants (b) et (c), est de 1/0,85 à 1,25.

10. Procédé selon les revendications 1 et 2, caractérisé par le fait que les corps moulés compacts possèdent une densité de 0,8 à 1,4 $g/cm^3$ et les corps moulés à noyau cellulaire et peau compacte possèdent une densité globale de 0,2 à 1,1 $g/cm^3$ et sont préparés sous compression.